# EUROPÄISCHE PATENTSCHRIFT

(11) **EP 0 389 416 B1**
(45) Veröffentlichungstag und Bekanntmachung des Hinweises auf die Patenterteilung: **10.11.1993**
(21) Anmeldenummer: 90810172.8
(22) Anmeldetag: 07.03.1990
(51) Int. Cl.: B60T 13/66, B60T 17/22, B61C 11/04

(54) **Bremseinrichtung für ein Schienenfahrzeug, insbesondere ein Zahnradfahrzeug**
Brake system for a railway vehicle, especially for a rack railway
Système de frein pour véhicule sur rails, en particulier pour chemin de fer à crémaillère

(30) Priorität: 22.03.1989 CH 1075/89
(43) Veröffentlichungstag der Anmeldung: 26.09.1990
(73) Patentinhaber: Schweizerische Lokomotiv- und Maschinenfabrik, CH-8401 Winterthur (CH)
(72) Erfinder: Zanoni, Pietro, CH-8400 Winterthur (CH); Lanz, Daniel, CH-3414 Oberburg (CH)
(74) Vertreter: Trieblnig, Adolf

(56) Entgegenhaltungen:
- EP-A- 0 220 821
- CH-A- 196 858
- DE-B- 2 501 901
- FR-A- 2 436 049

## Beschreibung

Die Erfindung betrifft eine Bremseinrichtung für ein Schienenfahrzeug zum Befahren von Strecken mit starkem Gefälle, insbesondere ein Zahnradfahrzeug, mit mindestens zwei voneinander unabhängigen Bremssystemen, von denen jedes eine Anzahl zum sicheren Anhalten des Fahrzeuges geeignete mechanische Bremsaggregate und eine diesen zugeordnete steuereinrichtung enthält, die eine Anzahl über eine Schalteinrichtung beeinflussbare, entsprechend einer vorbestimmten schaltlogik ansteuerbare stellglieder umfasst, über welche die Bremsaggregate des betreffenden Bremssystems jeweils im Sinne einer Aktivierung oder einer Lösung der Bremsen betätigbar sind.

Eine Bremseinrichtung der genannten Art ist im Zusammenhang mit einem für Zahnrad- und Adhäsionsbetrieb ausgelegten Zahnradfahrzeug bekannt ("SLM Technische Mitteilungen 1987", Seiten 30 - 35). Die bekannte Bremseinrichtung enthält zwei je zum Anhalten des Fahrzeuges im Zahnradbetrieb geeignete Bremssysteme und ein zum Anhalten des Fahrzeuges im Adhäsionsbetrieb geeignetes drittes Bremssystem. Jedes Bremssystem enthält mehrere, z.B. vier, elektropneumatische stellglieder, welche über eine Relaissteuerung an die dem Bremssystem zugeordnete Schalteinrichtung sowie an Sicherheitseinrichtungen angeschlossen sind, durch welche jeweils -- z.B. bei Uebergeschwindigkeit, bei einem ungewollten Zurückrollen des Fahrzeuges oder über einen Totmannschalter -- eine Notbremsung ausgelöst werden kann. Diese Relaissteuerungen der von jedem der beiden Führerstände des Fahrzeuges aus zu betätigenden Bremssysteme erfordern einen relativ grossen Arbeitsaufwand bei der Verdrahtung der Steuereinrichtungen, um eine betriebssichere Betätigung der Bremssysteme zu gewährleisten. Bei diesen in wesentlichen Teilen identischen Relaissteuerungen besteht zudem zumindest theoretisch die Möglichkeit, dass durch gleichzeitiges Auftreten von Fehlern in gleichartigen Teilen, oder bei gewissen ungünstigen Kombinationen von Betriebszuständen, durch die beiden voneinander unabhängigen Bremssysteme eine unerwünschte Doppelbremsung ausgeführt wird. Dies kann etwa während einer über das eine Bremssystem eingeleiteten Bremsung bei gleichzeitigem Ansprechen einer auf das andere Bremssystem einwirkenden Sicherheitseinrichtung, oder bei gleichzeitigem Ansprechen zweier je auf eines der Bremssysteme einwirkender Sicherheitseinrichtungen geschehen, wodurch eine für die Entgleisungssicherheit des Fahrzeuges nachteilige, relativ grosse Bremskraft ausgeübt wird, die dem Zweifachen der für das Anhalten erforderlichen Bremskraft entsprechen kann.

Der Erfindung liegt die Aufgabe zugrunde, eine in dieser Hinsicht verbesserte, insbesondere hinsichtlich der Verdrahtung der Steuereinrichtungen vereinfachte Bremseinrichtung mit strikt voneinander getrennten Steuereinrichtungen für die voneinander unabhängigen Bremssysteme zu schaffen, durch welche die Gefahr einer durch ungewollte gleichzeitige Betätigung der beiden Bremssysteme verursachten Ueberbremsung vermindert und damit die Entgleisungssicherheit des Fahrzeuges erhöht wird.

Diese Aufgabe wird erfindungsgemäss bei einer Bremseinrichtung der eingangs genannten Art dadurch gelöst, dass die Steuereinrichtung mindestens eines der Bremssysteme eine zumindest entsprechend der Schaltlogik dieses einen, ersten Bremssystems programmierbare elektronische Steuereinheit enthält, über welche die Stellglieder dieses Bremssystems an die zugehörige, erste Schalteinrichtung angeschlossen sind, wobei die Stellglieder des zweiten Bremssystems über von der Steuereinheit des ersten Bremssystems getrennte Steuermittel an die zweite Schalteinrichtung angeschlossen sind.

Bei der erfindungsgemässen Bremseinrichtung wird eine gegenüber bisherigen Ausführungen wesentlich vereinfachte Verdrahtung des elektrischen Teils des die programmierbare Steuereinheit enthaltenden Bremssystems erzielt. Alle für die Beeinflussung dieses Bremssystems erforderlichen Steuerorgane sind durch einfache Anschlüsse an die Steuereinheit anschliessbar, welche jeweils die Verbindung zwischen der Schalteinrichtung und den entsprechend der Schaltlogik zu beeinflussenden Stellgliedern herstellt. Zugleich wird eine von den Betätigungsorganen bis zu den Bremsaggregaten wirksame, konsequente funktionelle Trennung der Bremssysteme gewährleistet.

Durch eine unterschiedliche Ausbildung der Steuereinrichtungen der beiden Bremssysteme ist eine weitere Erhöhung der Betriebssicherheit erzielbar.

In den abhängigen Ansprüchen sind weitere Ausgestaltungen der Erfindung hervorgehoben.

Weitere Einzelheiten und Merkmale ergeben sich sich aus der folgenden Beschreibung von in der Zeichnung schematisch dargestellten Ausführungsbeispielen der Erfindung. Es zeigt:
- Fig. 1: ein mit einer erfindungsgemässen Bremseinrichtung versehenes Zahnrad-Doppeltriebfahrzeug für Zahnrad- und Adhäsionsbetrieb in einer Seitenansicht,
- Fig. 2: das Fahrzeug nach Fig. 1 in einer Draufsicht,
- Fig. 3: ein Drehgestell des Fahrzeuges im einer Draufsicht mit Teilschnitt,
- Fig. 4: zwei miteinander gekoppelte, je mit einer erfindungsgemässen Bremseinrichtung versehene Zahnrad-Triebfahrzeuge in einer abgewandelten Ausführungsform, in einer Draufsicht.

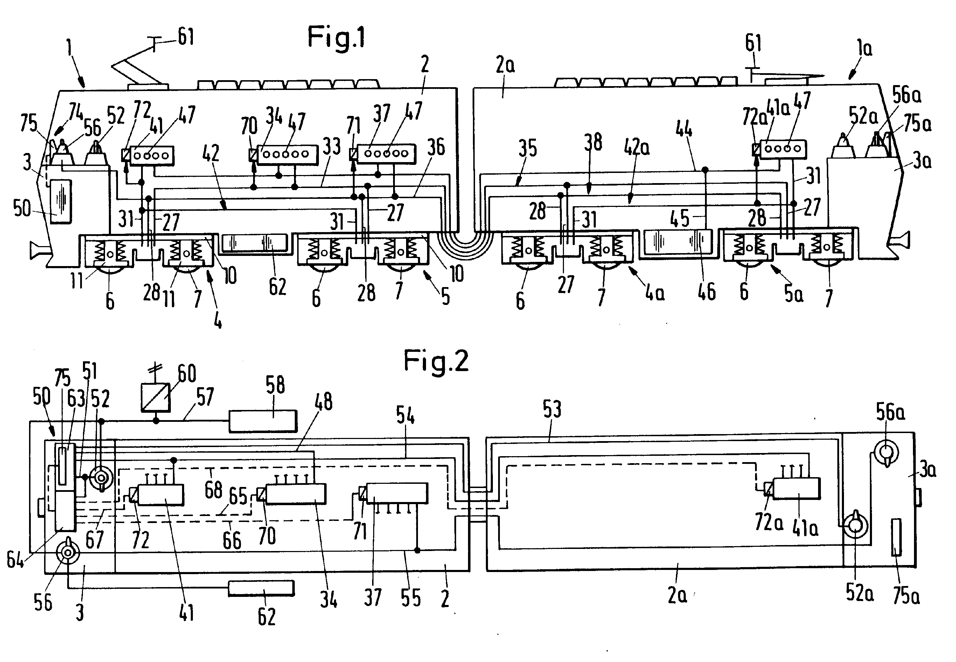

Das Zahnradfahrzeug nach den Fig. 1 und 2, ein Doppeltriebwagen für wahlweisen Zahnrad- und Adhäsionsbetrieb, besteht aus zwei miteinander gekuppelten Wagenhälften 1 und 1a, mit Fahrzeugkästen 2 und 2a, welche je einen Führerstand 3 bzw. 3a enthalten und welche je auf zwei Drehgestellen 4 und 5 bzw. 4a und 5a abgestützt sind. Jeder der Führerstände 3 und 3a enthält die für die Bedienung des Fahrzeuges erforderlichen Schalteinrichtungen. Die Drehgestelle 4 und 5, 4a und 5a enthalten je einen Triebradsatz 6 und einen Laufradsatz 7, von denen beide mit Adhäsionsrädern 8 versehen sind. Die Drehgestelle 4, 5, 4a und 5a enthalten je einen Drehgestellrahmen 10, der gefedert auf Achslagern 11 der Triebachse 12 und der Laufachse 13 abgestützt ist.

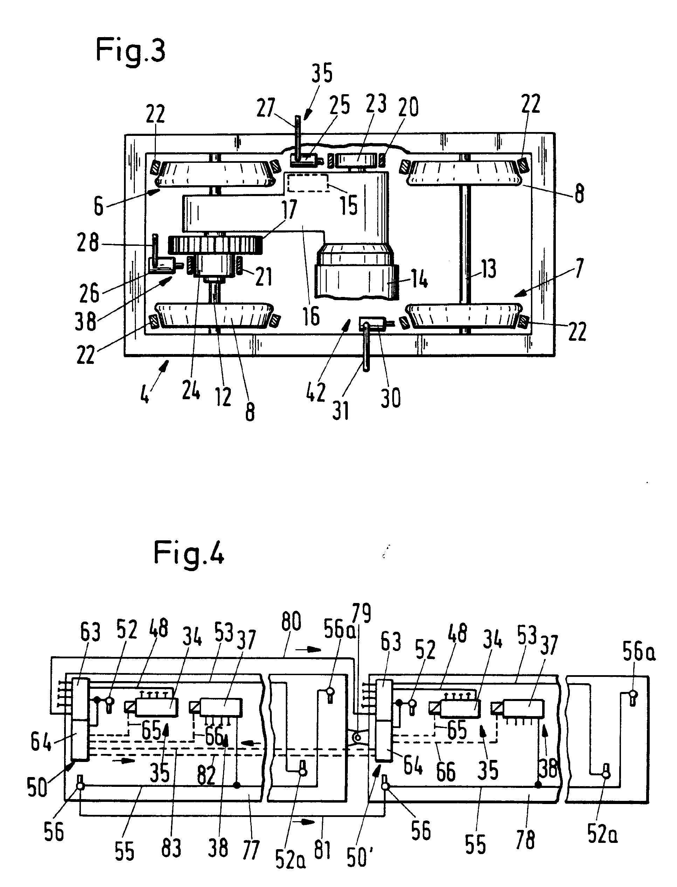

Jedes der Drehgestelle 4, 5, 4a, 5a enthält gemäss Fig. 3 einen Antriebsmotor 14, der am Drehgestellrahmen 10 auf nicht dargestellte Weise gehalten ist. Der Antriebsmotor 14 ist über eine zwischen zwei Schaltstellungen verstellbare Kupplung 15 und ein Getriebe 16 wahlweise mit der Triebachse 12 oder mit einem auf dieser angeordneten Triebzahnrad 17 kuppelbar, welches auf Streckenabschnitten mit grossem Gefälle in eine nicht dargestellte Zahnstange eingreift. Die Triebzahnräder 17 können je nach Bauart auf den Triebachsen 12 lose gelagert oder mit diesen jeweils drehfest verbunden sein.

Jedes Drehgestell 4, 5, 4a, 5a enthält zwei voneinander unabhängig betätigbare Bremsaggregate 20 und 21 sowie vier den Adhäsionsrädern 8 zugeordnete Bremsaggregate 22. Die Bremsaggregate 20 und 21 sind als Bandbremsen ausgebildet, welche je mit einer Bremstrommel 23 bzw. 24 zusammenwirken. Die Bremstrommel 23 ist mit einem Antriebsteil des Triebzahnrades 17, darstellungsgemäss mit der Welle des Antriebsmotors 14 verbunden, während die Bremstrommel 24 mit dem Triebzahnrad 17 drehfest verbunden ist. Die Bremsaggregate 22 können darstellungsgemäss als Backenbremsen ausgebildet sein, die mit den Adhäsionsrädern 8 zusammenwirken. Die Bremsaggregate 20 und 21 sind über pneumatische Druckzylinder 25 bzw. 26 betätigbar, welche je an eine Druckluftleitung 27 bzw. 28 angeschlossen sind. Zur Betätigung der Bremsaggregate 22 können entsprechende, je an eine Druckluftleitung 31 angeschlossene Druckzylinder 30 vorgesehen sein, von denen nur einer dargestellt ist.

Entsprechend der Darstellung nach Fig. 1, welche die mit den Bremsaggregaten 20, 21 und 22 verbundenen Druckluftleitungen zeigt, sind die Druckzylinder 25 aller Drehgestelle 4, 5, 4a, und 5a zueinander parallel über die Druckleitungen 27 und eine Verbindungsleitung 33 an eine Stelleinrichtung 34 eines ersten Bremssystems 35 angeschlossen, welches alle den Getrieben 16 zugeordneten Bremsaggregate 20 des Fahrzeuges umfasst. In entsprechender Weise sind die Druckzylinder 26 aller Drehgestelle 4, 5, 4a und 5a zueinander parallel über die Druckleitungen 28 und eine Verbindungsleitung 36 an eine Stelleinrichtung 37 eines zweiten Bremssystems 38 angeschlossen, welches alle den Triebzahnrädern 17 zugeordneten Bremsaggregate 21 des Fahrzeuges umfasst. Die Druckzylinder 30 der Drehgestelle 4 und 5 sind zueinander parallel über die Druckleitungen 31 an eine Stelleinrichtung 41 eines dritten Bremssystems 42 angeschlossen, welches alle den Adhäsionsrädern 8 zugeordneten Bremsaggregate 22 der Wagenhälfte 1 umfasst. Die Zylinder 30 der Drehgestelle 4a und 5a sind über die entsprechenden Druckleitungen 31 an eine Stelleinrichtung 41a eines vierten Bremssystems 42a angeschlossen, welches alle Bremsaggregate 22 der Wagenhälfte 1a umfasst.

Die Stelleinrichtungen 34, 37, 41 und 41a, die ausserhalb ihres in der Regel im Führerstand 3 bzw. 3a vorgesehenen Einbaubereichs dargestellt sind, sind zueinander parallel an eine Speiseleitung 44 angeschlossen, welche über eine Zuführleitung 45 mit einer Druckluftquelle 46 verbunden ist, die einen nicht dargestellten Kompressor enthält. Die Stelleinrichtungen 34, 37 und 41, 41a enthalten je eine Anzahl, darstellungsgemäss fünf bzw. vier, der Speiseleitung 44 und dem betreffenden Bremssystem 33, 36 bzw. 42, 42a zugeordnete, selektiv ansteuerbare Stellglieder 47, von denen z.B. drei als Bremssteuerorgane und die übrigen als Lösesteuerorgane dienen können. Die Bremssteuerorgane, von denen je eines für betriebsmässige Bremsungen, eines für Notbremsungen und eines zum Feststellen der Bremsen bestimmt sein kann, sind je zwischen einer die Betätigung der Bremsen zulassenden Durchflussstellung und einer die Betätigung verhindernden Sperrstellung verstellbar. Entsprechend sind die Lösesteuerorgane je zwischen einer das Lösen der Bremsen zulassenden Lösestellung und einer das Lösen verhindernden Sperrstellung verstellbar. Die Bremskraft jedes der Bremsaggregate 20, 21 und 22 wird jeweils durch einen im betreffenen Druckzylinder 25, 26, 30 vorgesehenen Federspeicher aufgebracht. Zum Lösen der Bremsen wird jeweils der Kolben des Druckzylinders 25, 26, 30 durch Druckluftzufuhr zurückgestellt. Entsprechende Druckzylinder und Stellglieder, deren Anordnung und Ausbildung nicht Gegenstand der vorliegenden Erfindung sind, sind z.B. aus der CH-PS 625 752 bekannt.

In der Fig. 2 sind die für die Steuerung der elektropneumatischen Stelleinrichtungen 34, 37, 41 und 41a wesentlichen elektrischen Schaltungen dargestellt. Entsprechend dieser Darstellung sind die Stellorgane 47 der Stelleinrichtung 34 über elektrische Steuerleitungen 48, von denen, der besseren Uebersicht wegen, nur eine dargestellt ist, an eine Steuereinheit 50 angeschlossen, welche über Steuerleitungen 51 an eine im Führerstand 3 angeordnete Schalteinrichtung 52, und über Steuerleitungen 53 an eine entsprechende, im Führerstand 3a angeordnete Schalteinrichtung 52a angeschlossen ist. Die einander funktionsmässig entsprechenden Stellglieder 47 der Stelleinrichtungen 41 und 41a sind je zueinander parallel über eine gemeinsame Steuerleitung 54 ebenfalls an die Steuereinheit 50 angeschlossen. Die Stellglieder 47 der Stelleinrichtung 37 sind je über eine Steuerleitung 55 an eine im Führerstand 3 angeordnete Relais-Schalteinrichtung 56 und eine entsprechende, im Führerstand 3a angeordnete Schalteinrichtung 56a angeschlossen. Durch eine Verriegelungsanordnung wird sichergestellt, dass die Stelleinrichtungen 34, 37, 41, 41a jeweils nur von einem der Führerstände 3 bzw. 3a aus angesteuert werden können.

Die Schalteinrichtungen 52, 52a, 56, 56a sind an ein Stromnetz 57 angeschlossen, welches eine über dieses aufladbare Fahrzeugbatterie 58 enthält und welches über einen Umformer 60 mit den Stromabnehmern 61 des Fahrzeuges in Verbindung steht. Die Schalteinrichtungen 56 und 56a sind ferner an eine jeweils extern oder, wie in Fig. 2 angedeutet, über das Stromnetz 57 aufladbare zusätzliche Batterie 62 angeschlossen, welche bei Stromausfall und Ausfall der Fahrzeugbatterie 58 als Hilfsbatterie für die Stromversorgung der Stelleinrichtung 37 dient. Dadurch wird die strikte funktionelle Trennung der Bremssysteme 35 und 38 auch hinsichtlich der Energieversorgung gewährleistet, so dass die Betriebssicherheit der Bremseinrichtung entsprechend erhöht wird.

Die Steuereinheit 50 enthält einen entsprechend einer verbestimmten Schaltlogik der Schalteinrichtung 52 programmierbaren elektronischen Prozessrechner 63 und einen Kontrollrechner 64. Der Prozessrechner 63 und der Kontrollrechner 64 sind nach einer Ausführungsform je durch eine Anzahl steuerprogrammierbare Rechnermodule gebildet. Nach einer anderen Ausführungsform kann die Steuereinheit 50 auch durch einen Fail-safe-Rechner gebildet sein.

Der Kontrollrechner 64 ist über in der Fig.2 gestrichelt dargestellte Signalleitungen 65, 66, 67 und 68 an Druckfühler 70, 71, 72 und 72a angeschlossen, die darstellungsgemäss je an einer der Stelleinrichtungen 34, 37, 41 bzw. 41a vorgesehen sein können. Ueber die Druckfühler 70 und 71 ist je ein dem Druck in den Druckleitungen 27 bzw. 28 entsprechendes elektrisches Kontrollsignal an den Kontrollrechner 64 übertragbar, während über die Druckfühler 72 und 72a je ein dem Druck in den Druckleitungen 31 entsprechendes Kontrollsignal übertragbar ist. Der Kontrollrechner 64 erhält somit über die Signal leitungen 65, 66, 67 und 68 Informationen über den jeweiligen Betriebszustand der Bremsaggregate 20, 21 und 22. Der Kontrollrechner 64 kann ferner mit einer Diagnoseeinrichtung 74 verbunden sein, welche eine im betreffenden, z.B. talseitigen, Führerstand 3 angeordnete Anzeigetafel 75 enthält.

Darstellungsgemäss kann auch im Führerstand 3a eine entsprechende Anzeigetafel 75a vorgesehen sein.

Die Schalteinrichtungen 52 und 52a enthalten je einen feinstufig einstellbaren Schalthebel als Fahr- und Bremsschalter, über den bei Zahnradbetrieb das Bremssystem 35 und bei Adhäsionsbetrieb die Bremssysteme 42 und 42a zum betriebsmässigen Anhalten des Fahrzeuges, für Notbremsungen sowie zum Feststellen und Lösen der Bremsen betätigbar sind. Die Umschaltung zwischen Zahnradbetrieb und Adhäsionsbetrieb erfolgt jeweils über einen nicht dargestellten Betriebsschalter. Ueber die jeweils zur Betätigung freigegebene Schalteinrichtung 52 bzw. 52a werden Steuerbefehle an die Steuereinheit 50 übertragen. Entsprechend der vorbestimmten Schaltlogik wird über die Steuereinheit 50 bei Zahnradbetrieb jeweils eines der Stellglieder 47 der Stelleinrichtung 34 zur betimmungsgemässen Betätigung der Bremsaggregate 20 angesteuert; bei Adhäsionsbetrieb werden jeweils die beiden funktionsmässig entsprechenden, je in einer der Stelleinrichtung 41 bzw. 41a angeordneten Stellglieder 47 zur Betätigung der Bremsaggregate 22 angesteuert. Die Steuerleitungen 48 und 54 der je zur Auslösung einer Schnellbremsung bestimmten Stellglieder 47 der Steuereinrichtungen 34 bzw. 41, 41a können zusätzlich direkt an die Schalteinrichtungen 52, 52a angeschlossen sein, über welche somit, in einer entsprechenden Schaltstellung, jederzeit eine von der Steuereinheit 50 unabhängige Schnellbremsung ausgelöst werden kann.

Die an die Steuereinheit 50 übertragenen Steuerbefehle der Schalteinrichtung 52 bzw. 52a und weitere Informationen, z.B. Signale eines nicht dargestellten Totmannschalters und von bei Uebergeschwindigkeit und beim Zurückrollen des Fahrzeuges automatisch ansprechenden, nicht dargestellten Sicherheitseinrichtungen, werden sowohl in den Prozessrechner 63 als auch in den Kontrollrechner 64 eingegeben. Durch die Signalleitungen 65 und 67 und 68 wird jeweils der Steuerkreis für das betreffende Bremssystem 35 bzw. 42, 42a geschlossen. Durch den Kontrollrechner 64 wird festgestellt, ob die vorgegebenen Steuerbefehle ausgeführt wurden und ob der Ist-Zustand mit einem dem jeweiligen Betriebszustand des Fahrzeuges entsprechend vorbestimmten Soll-Zustand übereinstimmt. Fehlermeldungen und weitere, z.B. das Ansprechen einer Sicherheitseinrichtung signalisierende Betriebsinformationen können auf die Anzeigetafeln 75, 75a übertragen werden.

Die Schalteinrichtungen 56 und 56a sind zur ausschliesslichen Betätigung des Bremssystems 38 vorgesehen, welches nur bei Zahnradbetrieb entsprechend der vorbestimmten Schaltlogik ansteuerbar ist, die im wesentlichen mit derjenigen der Steuereinheit 50 übereinstimmt. Die Steuerbefehle der jeweils zur Betätigung freigegebenen Relais-Schalteinrichtung 56 bzw. 56a sowie die Signale von dem Bremssystem 38 zugeordneten, nicht dargestellten Sicherheitseinrichtungen werden unmittelbar je auf eines der Stellglieder 47 der Stelleinrichtung 37 zur entsprechenden Betätigung der Bremsaggregate 21 übertragen. Die Schalteinrichtung 56 enthält ein an die Druckleitung 36 (Fig. 1) angeschlossenes, nicht dargestelltes Bremsventil, durch dessen Betätigung - unabhängig von der elektrischen Steuerung - über die Bremsaggregate 21 eine Bremsung des Fahrzeuges ausgelöst werden kann. Ueber die Signalleitung 66 wird das dem Ist-Zustand der Bremsaggregate 21 entsprechende Kontrollsignal an den Kontrollrechner 64 übertragen, welcher somit auch durch die Bremsbefehle des vom Prozessrechner 63 nicht gesteuerten Bremssystems 38 beeinflussbar ist.

Durch die programmierbare Steuereinheit 50 und die entsprechend unterschiedliche Ansteuerung der Bremssysteme 35 und 38 bei Zahnradbetrieb wird eine hohe Fehlersicherheit der Bremseinrichtung gewährleistet. Die Steuereinheit 50 kann auch durch weitere, die vorgegebene Schaltlogik ergänzende Parameter des Fahrbetriebes, etwa durch von der jeweiligen Belastung des Fahrzeuges oder von der Neigung des jeweils durchfahrenen Streckenabschnitts abgeleitete Steuersignale, im Sinne einer Steuerung der Bremswirkung beeinflusst werden. Zur Ueberwachung der Bremssysteme 35, 38, 41, 41a kann auch z.B. ein Fühlorgan vorgesehen sein, über welches ein der jeweiligen Verzögerung des Fahrzeuges entsprechendes Kontrollsignal an den Kontrollrechner 64 übertragbar ist.

Nach einer abgewandelten Ausführungsform kann die programmierbare Steuereinheit 50 dem zweiten Bremssystem 38 zugeordnet und das erste Bremssystem 35 an die Relais-Schalteinrichtung 56, 56a angeschlossen sein. Die Adhäsionsbremssysteme 42, 42a, oder ein entsprechendes gemeinsames Bremssystem, können ebenfalls an die Relais-Schalteinrichtung 56, 56a angeschlossen sein. Es ist jedoch auch eine Ausführung mit zwei programmierbaren Steuereinheiten möglich, wobei die eine dem ersten Bremssystem 35, und die andere dem zweiten Bremssystem 38 zugeordnet sein kann. Bei Fahrzeugen für reinen Zahnradbetrieb können Adhäsionsbremssysteme entfallen.

In der Fig. 4 sind zwei je mit einer erfindungsgemässen Bremseinrichtung ausgeführte Zahnradfahrzeuge 77 und 78 dargestellt, welche für den Betrieb in Mehrfachtraktion über eine Zug- und Bremskräfte übertragende Verbindung 79 gekoppelt sind. Die hinsichtlich Druckmittelversorgung vollständig voneinander getrennten Bremseinrichtungen der beiden Fahrzeuge 77 und 78 sind miteinander nur über elektrische Leitungen verbunden. Gemäss Fig. 4, welche nur die entsprechenden elektrischen Anschlüsse zeigt, sind die Bremssysteme 35 der beiden Fahrzeuge 77 und 78 über Steuerleitungen 80 und Kontrolleitungen 82, 83 gekoppelt, von denen jeweils nur eine dargestellt ist. Die Steuerleitungen 80 verbinden die Prozessrechner 63 der Steuereinheiten 50, während die Kontrolleitungen 82 und 83 die Kontrollrechner 64 miteinander verbinden. Die Bremssysteme 38 der beiden Fahrzeuge 77 und 78 sind über Steuerleitungen 81 gekoppelt, welche die zugehörigen Schalteinrichtungen 56 miteinander verbinden.

Die Steuerleitungen 80 und 81 sind so geschaltet, dass sie die Uebertragung von Steuerbefehlen jeweils nur vom Prozessrechner 63 bzw. von der Schalteinrichtung 56 des führenden Fahrzeuges, z.B. des Fahrzeuges 77, an den Prozessrechner 63 bzw. die Schalteinrichtung 56 des geführten Fahrzeuges, in diesem Falle des Fahrzeuges 78, zulassen. Ueber die Kontrolleitungen 82 sind Kontrollsignale vom Kontrollrechner 64 des Fahrzeuges 77 an den Kontrollrechner 64 des Fahrzeuges 78 übertragbar, währende die Kontrolleitungen 83 die Uebertragung von Kontrollsignalen vom Kontrollrechner 64 des Fahrzeuges 78 an den Kontrollrechner 64 des Fahrzeuges 77 zulassen. In der Fig. 4 sind die entsprechenden Richtungen der Signalübertragung, bezogen auf das Fahrzeug 77 als führendes Fahrzeug, durch den Leitungen 80, 81, 82 und 83 zugeordnete Pfeile angedeutet. Den Schalteinrichtungen 52, 52a, 56, 56a sind nicht dargestellte Sperrmittel zugeordnet, durch welche eine Beeinflussung der Bremseinrichtungen durch vom jeweils geführten Fahrzeug ausgehende Steuerbefehle verhindert wird. Entsprechend sind die Bremssysteme 35 und 38 der beiden gekoppelten Fahrzeuge 77 und 78 nur über die Schalteinrichtungen 52, 52a bzw. 56, 56a des führenden Fahrzeugs ansteuerbar.

Beim dargestellten Beispiel können die dem Zustand der Bremssysteme 35 und 38 des geführten Fahrzeuges 78 entsprechenden Kontrollsignale über die Kontrolleitungen 83 in die Steuereinheit 50 des führenden Fahrzeuges 77 eingegeben und bei der Führung der beiden Fahrzeuge 77 und 78 berücksichtigt werden. Entsprechend wird die Steuereinheit des geführten Fahrzeuges 78 über die Kontrolleitung 82 durch Signale der Steuereinheit 50 des Fahrzeuges 77 beeinflusst. Der Fahrzeugführer kann somit jederzeit den Zustand aller vorhandenen Bremssysteme überprüfen und feststellen, ob die jeweiligen Steuerbefehle richtig ausgeführt wurden. Durch diese ständig verfügbaren Informationen kann jede Fehlfunktion der einzelnen Bremssysteme, z.B. ein nicht ausgeführter Befehl zum Lösen der Bremsen des Bremssystems 38 des geführten Fahrzeuges 78, rechtzeitig erkannt und behoben werden, um bei einer Betätigung der Bremsen der Bremssysteme 35 eine Doppelbremsung zu vermeiden.

Die erfindungsgemässe Bremseinrichtung ist auch für andere, auf Strecken mit grossem Gefälle betriebene Fahrzeuge, z.B. Grubenfahrzeuge, geeignet, die ein- oder mehrteilig ausgeführt sein können. Ferner ist die erfindungsgemässe Ausbildung der Bremseinrichtung auch für Ausführungen verwendbar, welche anstelle der beschriebenen, passiven Betätigungseinrichtungen für die Bremsaggregate entsprechende aktive Betätigungseinrichtungen enthalten, bei denen eine Füllung der Bremszylinder jeweils eine Bremsung, und eine Entleerung der Bremszylinder ein Lösen der Bremsen bewirkt. Ebenso sind anstelle der beschriebenen pneumatischen Stell- und Betätigungseinrichtungen entsprechende hydraulische Einrichtungen anwendbar. Als Bremsaggregate können auch Scheibenbremsen vorgesehen sein.

## Patentansprüche

1. Bremseinrichtung für ein Schienenfahrzeug zum Befahren von Strecken mit starkem Gefälle, insbesondere ein Zahnradfahrzeug, mit mindestens zwei voneinander unabhängigen Bremssystemen (35 und 38), von denen jedes eine Anzahl zum sicheren Anhalten des Fahrzeuges geeignete, über eine systemeigene Verbindungsleitung (33 bzw. 36) an eine Druckmittelquelle (46) angeschlossene mechanische Bremsaggregate (20 bzw. 21) und eine diesen zugeordnete Stelleinrichtung (34 bzw. 37) enthält, die eine Anzahl über eine Schalteinrichtung (52, 52a, bzw. 56, 56a) beeinflussbare, entsprechend einer vorbestimmten Schaltlogik ansteuerbare Stellglieder (47) umfasst, über welche die Bremsaggregate (20 bzw. 21) des betreffenden Bremssystems (35 bzw. 38) jeweils im Sinne einer Aktivierung oder einer Lösung der Bremsen betätigbar sind, dadurch gekennzeichnet, dass mindestens eine der Stelleinrichtungen (34 bzw. 37) an eine zumindest entsprechend der Schaltlogik des betreffenden, ersten Bremssystems (35) programmierbare elektronische Steuereinheit (50) angeschlossen ist, über welche die der Verbindungsleitung (33) dieses ersten Bremssystems (35) zugeordneten Stellglieder (47) mit der zugehörigen, ersten Schalteinrichtung (52, 52a) verbunden sind, wobei die Stelleinrichtung (37) mit den der Verbindungsleitung (36) des zweiten Bremssystems (38) zugeordneten Stellgliedern (47) von der Steuereinheit (50) des ersten Bremssystems (35) unabhängig mit der zweiten Schalteinrichtung (56, 56a) verbunden ist.

2. Bremseinrichtung nach Anspruch 1, mit einem zusätzlichen Bremssystem (42, 42a), welches eine Anzahl zum Anhalten des Fahrzeugs auf im Adhäsionsbetrieb befahrbaren Streckenabschnitten geeignete, über eine weitere systemeigene Verbindungsleitung (31) an die Druckmittelquelle (46) angeschlossene Bremsaggregate (22) und eine diesen zugeordnete Stelleinrichtung (41,41a) aufweist, dadurch gekennzeichnet, dass auch die Stelleinrichtung (41, 41a) mit dem der Verbindungsleitung (31) des zusätzlichen Bremssystems (42, 42a) zugeordneten Stellglieder (47) an die programmierbare Steuereinheit (50) des ersten Bremssystems (35) angeschlossen ist.

3. Bremseinrichtung nach Anspruch 1 oder 2, dadurch gekennzeichnet, dass die Steuereinheit (50) durch einen Prozessrechner (63) und einen zu diesem parallel an die erste Schalteinrichtung (52) angeschlossenen Kontrollrechner (64) gebildet ist, und dass das bzw. jedes zugehörige Bremssystem (35, 42, 42a) mindestens ein den Bremsaggregaten (20 bzw. 22) zugeordnetes Fühlorgan (70 bzw. 72, 72a) enthält, welches mit dem Kontrollrechner (64) über eine einen Steuerkreis schliessende Signalleitung (65 bzw. 67, 68) verbunden ist, die zur Uebertragung eines dem jeweiligen Ist-Zustand der Bremsaggregate (20 bzw. 22) entsprechenden Kontrollsignals an den Kontrollrechner (64) dient, in welchem dem jeweiligen Betriebszustand des Fahrzeuges entsprechende Soll-Werte dieses Kontrollsignals speicherbar sind und durch welchen jeweils ein aus dem Vergleich des Ist-Wertes dieses Kontrollsignals mit dem Soll-Wert gebildetes Steuersignal an den Prozessrechner (63) übertragbar ist.

4. Bremseinrichtung nach Anspruch 3, dadurch gekennzeichnet, dass mindestens ein den Bremsaggregaten (21) des zweiten Bremssystems (38) zugeordnetes Fühlorgan (71) über eine zur Uebertragung eines dem Ist-Zustand dieser Bremsaggregate (21) entsprechenden Kontrollsignals bestimmte Signalleitung (66) mit dem Kontrollrechner (64) verbunden ist.

5. Bremseinrichtung nach Anspruch 3 oder 4, dadurch gekennzeichnet, dass der Kontrollrechner (64) mit einer Diagnoseeinrichtung (74) verbunden ist, an der zumindest eine dem Ist-Zustand der Bremsaggregate (20, 21, 22) entsprechende Information, z.B. in Form einer Textanzeige, darstellbar ist.

6. Bremseinrichtung nach einem der vorangehenden Ansprüche, mit einer an eine zentrale Energieversorgungseinrichtung des Fahrzeuges angeschlossenen, zur Speisung der Stelleinrichtungen (34,37,41,41a) der Bremssysteme (35, 38, 42, 42a) geeigneten elektrischen Fahrzeugbatterie (58), dadurch gekennzeichnet, dass eines der Bremssysteme (38) mit einer zusätzlichen elektrischen Batterie (62) versehen ist, die zur Speisung der Stelleinrichtung (37) dieses Bremssystems (38) geeignet ist.

7. Verwendung einer Bremseinrichtung nach einem der vorangehenden Ansprüche an einem Fahrzeug (77), welches mit mindestens einem eine entsprechende Bremseinrichtung aufweisenden weiteren Fahrzeug (78) für den Betrieb in Mehrfachtraktion gekoppelt ist, wobei die die programmierbaren Steuereinheiten (50) enthaltenden Bremssysteme (35) dieser Fahrzeuge (77, 78) über die Steuereinheiten (50) miteinander verbindende elektrische Steuerleitungen (80) und Kontrolleitungen (82, 83) gekoppelt sind und die zweiten Bremssysteme (38) dieser Fahrzeuge (77, 78) über die zweiten Schalteinrichtungen (56, 56a) miteinander verbindende Steuerleitungen (81) gekoppelt sind, welche Steuerleitungen (80 und 81) so geschaltet sind, dass sie die Uebertragung von Steuerbefehlen nur von der ersten Schalteinrichtung (52, 52a) und der Steuereinheit (50) bzw. von der zweiten Schalteinrichtung (56, 56a) des jeweils führenden Fahrzeuges (77) auf die Steuereinheit (50) bzw. die zweite Schalteinrichtung (56, 56a) des jeweils geführten Fahrzeuges (78) zulassen, während über die Kontrolleitungen (82 und 83) Kontrollsignale von der Steuereinheit (50) des führenden Fahrzeuges (77) an die Steuereinheit (50) des geführten Fahrzeuges (78) bzw. in umgekehrter Richtung übertragbar sind, und wobei ferner Mittel vorgesehen sind, die eine vom geführten Fahrzeug (78) ausgehende Betätigung der Schalteinrichtungen (52, 52a, 56, 56a) verhindern.

## Claims

1. A braking arrangement for a rail vehicle, more particularly a rack vehicle, for use on steeply graded lines, the arrangement comprising at least two independent brake systems (35 and 38), each having a number of mechanical brake units (20; 21) adapted to stop the vehicle reliably and connected to a pressure medium source (46) via a connecting line (33; 36) belonging to the system, and, associated with such units, an adjusting system (34; 37), comprising a number of final control units (47) which can be acted on by way of a controller (52, 52a; 56, 56a), and are triggerable in accordance with a predetermined switching logic and via which the brake units (20; 21) of the associated brake system (35; 38) are operable in the sense of application or release of the brakes, characterised in that at least one of the adjusting systems (34; 37) is connected to an electronic control unit (50) which is programmable at least in accordance with the switching logic of the associated first brake system (35) and via which the final control elements (47) associated with the connecting line (33) of said first brake system (35) are connected to the associated first controller (52, 52a), the adjusting system (37) being connected independently of the control unit (50) of the first brake system (35) to the second controller (56, 56a) by the final control elements (47) associated with the connecting line (36) of the second brake system (38).

2. A braking arrangement according to claim 1, comprising an additional brake system (42, 42a) which comprises a number of brake units (22) adapted to stop the vehicle on adhesion-operated lines and connected to the pressure medium source (46) via another connecting line (31) belonging to the system, and an adjusting system (41, 41a) associated with said brake units (22), characterised in that the adjusting system (41, 41a) is also connected to the programmable control unit (50) of the first brake system (35) by the final control elements (47) associated with the connecting line (31) of the additional brake system (42, 42a).

3. A braking arrangement according to claim 1 or 2, characterised in that the control unit (50) comprises an on-line computer (63) and, connected in parallel therewith to the first controller (52), a monitor computer (64), and the brake systems (35, 42, 42a) each comprise at least one sensor (70, 72, 72a) which is associated with the brake units (20, 22) and connected to the monitor computer (64) by way of a signal line (65, 67, 68), the same closing a control circuit and being effective to transmit to the monitor computer (64) a monitor signal corresponding to the actual state of the brake units (20, 22), reference values of the latter signal which correspond to the operative state of the vehicle being storable in the monitor computer (64), the same being adapted to transmit to the on-line computer (63) a control signal formed from comparison of the monitor signal actual value with the reference value.

4. A braking arrangement according to claim 3, characterised in that at least one sensor (71) associated with the brake units (21) of the second brake system (38) is connected to the monitor computer (64) by way of signal line (66) adapted to transmit a monitor signal corresponding to the actual value of the latter brake units (21).

5. A braking arrangement according to claim 3 or 4, characterised in that the monitor computer (64) is connected to a diagnostic facility (74) adapted to display at least one information item, for example, in the form of a text display, corresponding to the actual state of the brake units (20, 21, 22).

6. A braking arrangement according to any of the previous claims comprising a vehicle battery (58) which is connected to a central power supply unit of the vehicle and adapted to energise the adjusting systems (34, 37, 41, 41a) of the brake systems (35, 38, 42, 42a), characterised in that one (38) of the brake systems has an additional battery (62) adapted to energise the adjusting system (37) of the latter brake system (38).

7. Use of a braking arrangement according to any of the previous claims for a vehicle (77) coupled for traction in multiple with at least one other vehicle (78) having a corresponding braking arrangement, the brake systems (35) of the vehicles (77, 78), such systems comprising the programmable control units (50), being interconnected by way of electrical control lines (80) and monitor lines (81, 82) interconnecting the control units (50), the second brake systems (38) of the vehicles (77, 78) being interconnected by way of control lines (81) interconnecting the second controllers (56, 56a), the control lines (80, 81) being so connected as to permit the transmission of control instructions only from the first controller (52, 52a) and the control unit (50) or from the second controller (56, 56a) of the leading vehicle (77) to the control unit (50) and second controller (56, 56a) of the trailing vehicle (78), whereas monitor signals can be transmitted via the monitor lines (82, 83) from the control unit (50) of the leading vehicle (77) to the control unit (50) of the trailing vehicle (78) and vice versa, means being provided to inhibit any such actuation of any of the controllers (52, 52a, 56, 56a) as originates from the trailing vehicle (78).

## Revendications

1. Dispositif de freinage d'un véhicule sur rails pour le passage sur des trajets en forte pente, en particulier véhicule à roue dentée, comprenant au moins deux systèmes indépendants de freinage (35 et 38), dont chacun comprend plusieurs groupes mécaniques de freinage (20 ainsi que 21) convenant pour arrêter de manière fiable le véhicule et raccordés par un conduit de liaison (33 ainsi que 36) propre au système à une source de fluide sous pression (46), ainsi qu'un dispositif de réglage (34 ainsi que 37) affecté à ces groupes de freinage et comprenant plusieurs organes réglants (47) sur lesquels agit un dispositif de commutation (52, 52a ainsi que 56, 56a), attaqués selon une logique prédéterminée de commutation et par lesquels les groupes de freinage (20 ainsi que 21) de chacun des systèmes concernés de freinage (35 ainsi que 38) peuvent être actionnés dans le sens d'une mise en service ou d'un desserrage des freins, caractérisé en ce qu'au moins l'un des dispositifs de réglage (34 ainsi que 37) est connecté à une unité électronique de commande (50) programmable au moins selon la logique de commutation du premier système concerné de freinage (35) et par laquelle les organes réglants (47) affectés au conduit de liaison (33) de ce premier système de freinage (35) sont reliés au premier dispositif correspondant de commutation (52, 52a), le dispositif de réglage (37) comprenant les organes réglants (47) affectés au conduit de liaison (36) du deuxième système de freinage (38) étant connecté au second dispositif de commutation (56, 56a) indépendamment de l'unité de commande (50) du premier système de freinage.

2. Dispositif de freinage selon la revendication 1, comprenant un système auxiliaire de freinage (42, 42a) comprenant plusieurs groupes de freinage (22) qui conviennent pour arrêter le véhicule sur des tronçons de trajet parcourus en marche par adhérence et qui sont raccordés par un autre conduit de liaison (31) propre au système à la source de fluide sous pression (46), ainsi qu'un dispositif de réglage (41, 41a) affecté à ces groupes de freinage, caractérisé en ce que le dispositif de réglage (41, 41a) comprenant les organes réglants (47) affectés au conduit de liaison (31) du système auxiliaire de freinage (42, 42a) est aussi raccordé à l'unité programmable de commande (50) du premier système de freinage (35).

3. Dispositif de freinage selon la revendication 1 ou 2, caractérisé en ce que l'unité de commande (50) est formée d'une calculatrice de traitement (63) et d'une calculatrice de contrôle (64) connectée en parallèle avec la précédente au premier dispositif de commutation (52) et en ce que le ou chaque système correspondant de freinage (35, 42, 42a) comprend au moins un organe détecteur (70 ainsi que 72, 72a) affecté aux groupes de freinage (20 ainsi que 22) et connecté à la calculatrice de contrôle (64) par un conducteur de signaux (65 ainsi que 67, 68) qui ferme un circuit de commande et qui sert à transmettre un signal de contrôle correspondant à l'état réel particulier des groupes de freinage (20 ainsi que 22) à la calculatrice de contrôle (64) dans laquelle. des grandeurs de consigne de ce signal de contrôle correspondant à l'état particulier de service du véhicule peuvent être mémorisées et par laquelle un signal de commande formé dans chaque cas par la comparaison de la valeur réelle de ce signal de contrôle avec la grandeur de consigne peut être transmis à la calculatrice de traitement (63).

4. Dispositif de freinage selon la revendication 3, caractérisé en ce qu'au moins un organe détecteur (71) affecté aux groupes de freinage (21) du deuxième système de freinage (38) est connecté à la calculatrice de contrôle (64) par un conducteur de signaux (66) destiné à la transmission d'un signal de contrôle correspondant à l'état réel de ces groupes de freinage (21).

5. Dispositif de freinage selon la revendication 3 ou 4, caractérisé en ce que la calculatrice de contrôle (64) est connectée à un dispositif de diagnostic (74) sur lequel au moins une information correspondant à l'état réel des groupes de freinage (20, 21, 22) peut être représentée par exemple sous la forme de l'affichage d'un texte.

6. Dispositif de freinage selon l'une des revendications précédentes, comprenant une batterie électrique (58) du véhicule raccordée à un dispositif central d'alimentation en énergie du véhicule et convenant à l'alimentation des dispositifs de réglage (34, 37, 41, 41a) des systèmes de freinage (35, 38, 42, 42a), caractérisé en ce que l'un des systèmes de freinage (38) est équipé d'une batterie électrique auxiliaire (62) qui convient à l'alimentation du dispositif de réglage (37) de ce système de freinage (38).

7. Utilisation d'un dispositif de freinage selon l'une des revendications précédentes, sur un véhicule (77) qui est attelé à au moins un autre véhicule (78) comprenant un dispositif correspondant de freinage pour la marche à traction multiple, les systèmes de freinage (35) de ces véhicules (77, 78) qui contiennent les unités programmables de commande (50) étant couplés par des conducteurs électriques de commande (80) reliant l'une à l'autre les unités de commande (50) et par des conducteurs de contrôle (82, 83) et les deuxièmes systèmes de freinage (38) de ces véhicules (77, 78) étant couplés par des conducteurs de commande (81) reliant l'un à l'autre les seconds dispositifs de commutation (56, 56a), lesdits conducteurs de commande (80 et 81) étant branchés de manière qu'ils n'autorisent la transmission d'instructions de commande que du premier dispositif de commutation (52, 52a) et de l'unité de commande (50) ou que du second dispositif de commutation (56, 56a) du véhicule de tête (77) à l'unité de commande (50) ainsi qu'au second dispositif de commutation (56, 56a) du véhicule guidé (78), tandis que des signaux de contrôle provenant de l'unité de commande (50) du véhicule de tête (77) peuvent être transmis par les conducteurs de contrôle (82 et 83) à l'unité de commande (50) du véhicule guidé (78) ou dans le sens inverse, des moyens étant par ailleurs prévus pour empêcher un actionnement des dispositifs de commutation (52, 52a, 56, 56a) qui a pour origine le véhicule guidé (78).
